# EUROPEAN PATENT APPLICATION

(11) **EP 2 515 539 A1**
(43) Date of publication of application: **24.10.2012**
(21) Application number: 12163796.1
(22) Date of filing: 11.04.2012
(51) Int. Cl.: H04N 7/26, H04N 13/00

(54) **Method for coding the occlusion images of a 3d video signal**

(30) Priority: 18.04.2011 FR 1153330
(71) Applicant: Thomson Licensing, 92130 Issy-les-Moulineaux (FR)
(72) Inventor: Kerbiriou, Paul, 35576 Cesson-Sévigné (FR); Lopez, Patrick, 35576 Cesson-Sévigné (FR); Boisson, Guillaume, 35576 Cesson-Sévigné (FR); Viellard, Thierry, 35576 Cesson-Sévigné (FR)
(74) Representative: Lorette, Anne

(57) **Abstract**

The invention relates to a method for coding a 3D video signal comprising a current image, a depth image and a current occlusion image. The coding method comprises a step of coding (40, 42, 44) current, depth and occlusion images. According to the invention, the current occlusion image is coded (44) according to the following steps for:
- coding (440, 446) for each block of the current occlusion image a binary identifier indicating if said block is coded or not, and
- coding (44) occlusion data for each block for which the binary identifier indicates that the block is coded.

## Description

### 1. Domain of the invention

The invention relates to the general domain of coding of a 3D video signal. More specifically the invention relates to a method for coding a 3D video signal comprising a current image, a depth image and a current occlusion image and a corresponding method for decoding.

### 2. Prior art

A 3D video signal generally comprises a 2D video composed of several images with each of which is associated a depth image and an occlusion image. The depth image or depth map gives information on the third dimension of the video signal.
The occlusion image or occlusion map gives information on the zones hidden by an object situated in the foreground of the scene. It is also known to transmit such an occlusion image as the depth image.

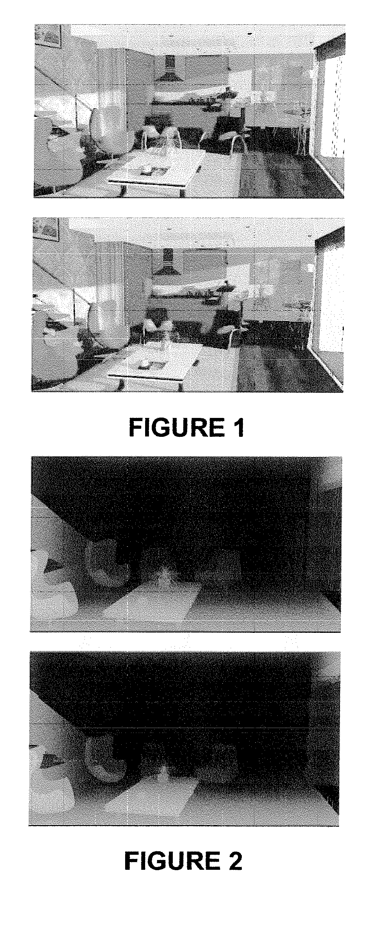

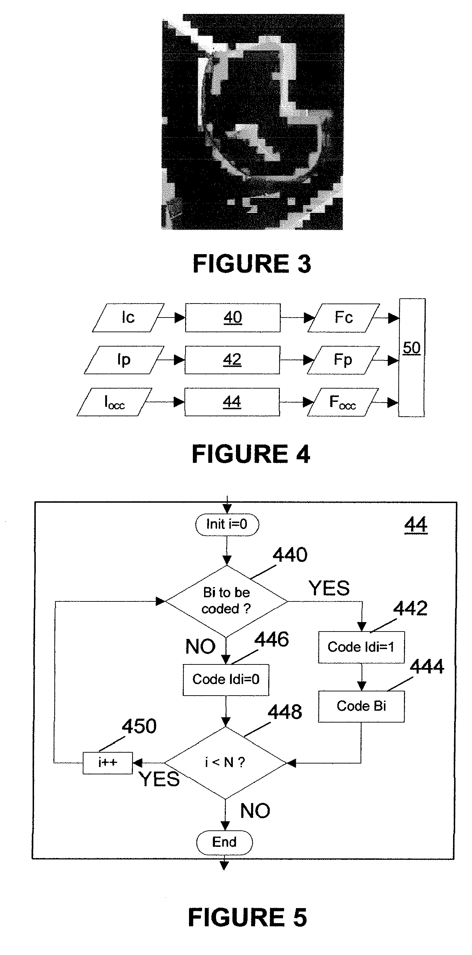

Occlusion images have a content very similar to the images with which they are associated as shown in **figures 1 and 2.** Figure 1 shows at the top a current image of a video and at the bottom the associated occlusion image. Figure 2 shows at the top a depth image and at the bottom the occlusion image associated with this depth image. In order to code the occlusion images more efficiently, it is known to mask on these the zones (or blocks) where all the pixels are identical to the pixels of images with which they are associated as shown in **figure 3.** Figure 3 shows a detail of images shown in figures 1 and 2. The zones in black are the zones of the occlusion image for which the pixels are identical to the corresponding pixels of the current image. Note that the same type of masked image is obtained using the depth image and the associated occlusion image. In figure 3, the masking is aligned on the grid of 16x16 blocks. In fact, the majority of existing coding methods use such 16x16 blocks to code image data (i.e. luminance and chrominance).

To code the 3D video signal, it is known to code 2D current images and, for each of them, the associated depth image, the masked occlusion image associated with the current image and possibly the masked occlusion image associated with the depth image. Currently, masked occlusion images are coded in accordance with the standard H.264/MPEG4-AVC defined in the document ISO/IEC 14496-10. Although it comprises only a reduced number of blocks comprising one item of pertinent information such masked occlusion images cost almost as much to code, i.e. are coded with as many bits, as the corresponding non-masked occlusion images. In fact, the skip mode that enables the bitrate to be significantly reduced is rarely used on such masked occlusion images. In order for the skip mode to be retained for coding, certain conditions must be verified. Particularly the neighbouring blocks must not be coded in INTRA, the median vector of causal neighbouring blocks must be equal to the motion vector of the current block and the residue cost must be null. Hence, as soon as a block on a non-masked part is coded in INTRA mode, the INTRA mode is propagated to the next blocks even those masked to the detriment of the skip mode.

### 3. Summary of the invention

The purpose of the invention is to overcome at least one of the disadvantages of the prior art. For this purpose, the invention relates to a method for coding a 3D video signal comprising a current image, a depth image and a current occlusion image. These images are divided into blocks. The coding method comprises a step of coding of current, depth and occlusion images. Advantageously, the current occlusion image is coded according to the following steps:
- coding for each block of the current occlusion image a binary identifier indicating if the block is coded or not
- coding occlusion data for each block for which the binary identifier indicates that the block is coded.

According to a particular characteristic of the invention, the step of coding for each block of the current occlusion image of a binary identifier comprises the coding without loss of a binary image.

According to another aspect of the invention, the coding method also comprises a step of coding of a first item of image data for filling blocks of the current occlusion image indicated as non-coded by the binary identifier. According to another embodiment, the 3D video signal comprising in addition a depth occlusion image divided into blocks, the coding method comprises a step of coding of depth occlusion data for each block of the depth occlusion image for which the binary identifier indicates that the block is coded. According to another aspect of the invention, the coding method also comprises a step of coding of a second item of image data for filling blocks of the depth occlusion image indicated as non-coded by the binary identifier. According to a particular characteristic of the invention, the binary identifier indicates that a block is non-coded when all the pixels of the block of the current occlusion map are identical to the pixels of the corresponding block in the current image.

The invention also relates to a method for decoding a 3D video signal comprising a current image, a depth image and a current occlusion image. The decoding method comprises a step of decoding of current, depth and occlusion images.

Advantageously, the current occlusion image is decoded according to the following steps:
- decoding for each block of the current occlusion image a binary identifier indicating if the block is coded or not
- decoding for each block of the current occlusion image for which the binary identifier indicates that the block is coded, and
- filling the blocks indicated as non-coded by the binary identifier with a first item of predetermined filling data.

According to a particular characteristic of the invention, the step of decoding for each block of the current occlusion image of a binary identifier comprises the decoding without loss of a binary image.

Advantageously, the method for decoding also comprises a step of decoding of the first item of predetermined filling data.

According to another embodiment, the 3D video signal comprising in addition a depth occlusion image divided into blocks, the decoding method also comprises the following steps for:
- decoding each block of the depth occlusion image for which the binary identifier indicates that the block is coded, and
- filling the blocks indicated as non-coded by the binary identifier with a second item of predetermined filling data.

According to a particular characteristic of the invention, the method for decoding also comprises a step of decoding of the second predetermined item of filling data.

### 4. List of figures

The invention will be better understood and illustrated by means of embodiments and advantageous implementations, by no means limiting, with reference to the figures in the appendix, wherein:
- Figure 1 shows, at the top, a 2D image and at the bottom a corresponding occlusion image,
- Figure 2 shows, at the top, a depth image and at the bottom a corresponding depth occlusion image,
- Figure 3 shows a masked occlusion image,
- figure 4 shows the coding method according to the invention,
- figure 5 shows in details a step of the coding method according to the invention,
- figure 6 shows a variant of the coding method according to the invention,
- figure 7 shows the decoding method according to the invention,
- figure 8 shows in details a step of the decoding method according to the invention,
- figure 9 illustrates a variant of the decoding method according to the invention,
- figure 10 shows a coding device according to the invention, and
- figure 11 shows a decoding device according to the invention.

### 5. Detailed description of the invention

It is to be understood that the present principles may be implemented in various forms of hardware, software, firmware, special purpose processors, or a combination thereof. Preferably, the present principles may be implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof) that is executed via the operating system. In addition, various other peripheral devices may be connected to the computer platform such as an additional data storage device and a printing device.

The invention may be realized on any electronic device comprising coding or decoding means correspondingly adapted. For instance, the invention may be realized in a television, a mobile videophone, a personal computer, a digital video camera, a navigation system or a car video system.

A 3D video signal comprises at least one current image Ic, a depth image Ip and a current occlusion image locc. These images are divided into blocks. The invention described for a current image applies directly to a 3D video signal comprising a video composed of several images each of which is associated with a depth image and an occlusion image.

**Figure 4** shows a coding method of the 3D video signal according to the invention. The method comprises a step 40 of coding of the current image into a stream of coded data Fc. As a simple example, the image Ic is coded in accordance with the standard H.264. For example, the coding method comprises some of the following steps: prediction of data to be coded to generate residues, transformation of residues into coefficients, quantization of coefficients and entropy coding of quantized coefficients. However some steps such as the prediction step and the transformation step can be omitted. According to a variant, the image Ic is coded in accordance with the MPEG-2 standard described in the document ISO/IEC 13818-2. Those skilled in the art can apply any image coding method to code the current image Ic, the invention being in no way limited by the method used in step 40 to code the current image Ic.

During a step 42, the depth image Ip is coded into a stream of coded data Fc. As a simple example, the depth image Ip is coded in accordance with the standard H.264. According to a variant, the depth image Ip is coded in accordance with the MPEG-2 standard. Those skilled in the art can apply any image coding method to code the depth image Ip, the invention being in no way limited by the method used in step 40 to code the depth image Ip.

During a step 44, the current occlusion image locc is coded into a stream of coded data Focc. Step 44 is described in reference to **figure 5****.** The index I represents the index of the block of the current occlusion image that is coded.
During a step 440, it is determined if an item of occlusion information must be coded for the current block Bi. In figure 3, the non-coded blocks are those shown in black on the masked occlusion image, i.e. those for which there is no useful occlusion information. Black blocks are blocks for which the pixels of the current occlusion image locc are identical to theh corresponding pixels of the current image Ic. If the block Bi comprises a useful item of occlusion information then the method continues to step 442 if not it continues to step 446.

During step 442, a binary identifier Idi is coded for the current block Bi indicating that the current block is coded. As an example, a value 1 is coded to indicate that the block Bi is coded. During a step 444, the occlusion data of the block Bi are then explicitly coded in the stream Focc for example using the coding principles of the H.264 standard.
During step 446, a binary identifier Idi is coded for the current block Bi indicating that the current block is non-coded. As an example, a value 0 is coded to indicate that the block Bi is non-coded. During a step 448, there is a check to see if the set of N blocks, where N is a whole number, of the current occlusion image are processed. If this is the case then the method ends for the current occlusion image, if not the method processes the next Bi block. For this purpose, the index i is incremented by 1 in step 450.

According to a particular characteristic of the invention, the binary identifiers Idi for the current occlusion image are coded in the form of a binary image also called a mask. The coding must be carried out without loss. Such an image is for example coded with a Huffman coding in a stream Fm. According to a variant, each binary identifier is coded in a block header, for example in the block headers of the stream Focc. In fact, it is known in order to code an image to code an image header, then for each image block a block header and useful data, for example quantized DCT coefficients. In the block header, it is known to code general information on the block, for example its coding mode.

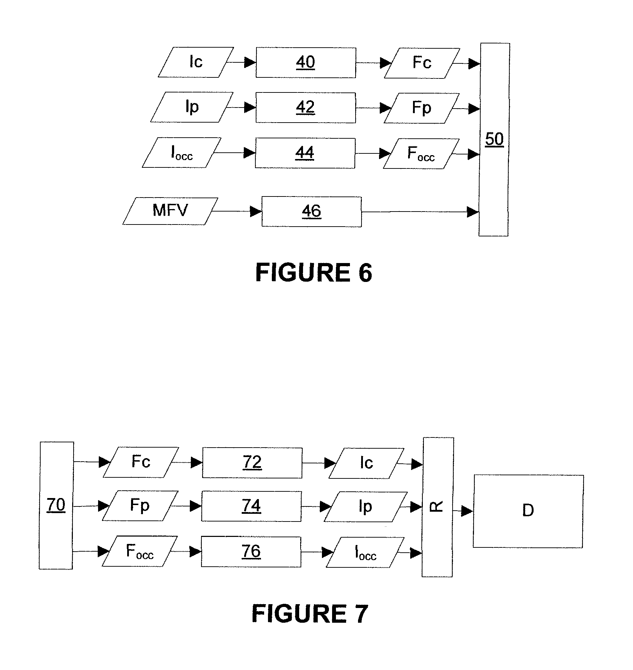

According to a variant, a value 0 is coded to indicate that the block Bi is coded and a value 1 is coded to indicate that the block Bi is non-coded. **Figure 6** shows another embodiment. Steps identical to the first embodiment of figure 4 are identified in figure 6 with the same references. According to this embodiment the coding method comprises steps 40, 42 and 44. It also comprises a step 46 coding a first item of MVF filling data of blocks Bi of the current occlusion image locc non-coded. Such a value is used by a decoding device to reconstruct the current occlusion image. In fact, the non-coded Bi blocks must be filled on the decoder side by a value. Such an MVF filling value is identical for all coded occlusion images associated with 2D images. It is therefore preferable to code the value once for the entire 3D video signal. For example, such a value can be coded in the user data or private data that are multiplexed with the streams Fc, Fp and Focc. It is possible to code such an item of data at MPEG-2 transport stream level. According to a variant such an MVF data item can be coded in an SEI (Supplemental Enhancement Information) type message.

The three streams Fc, Fp and Focc and possibly private data (e.g. the first MVF filling data item) are multiplexed, during an optional step 50, into a transport stream for transmission on a network. According to a variant the three streams and possibly the private data are stored on a support such as a DVD or hard disk.

In the case where the binary identifiers are coded in the form of a binary mask in a stream Fm, this stream Fm is also multiplexed during step 50 in the transport stream or stored on the support. According to a variant, the 3D video signal also comprises a depth occlusion image Ipocc divided into blocks. The coding method then comprises an additional step of coding of depth occlusion data for each block and for which the binary identifier indicates that the block is coded. This step is identical to step 444 but is applied on the depth occlusion image blocks. Note that a single binary identifier is coded per block or a single binary image is coded that serves both for the current occlusion image and the depth occlusion image. In fact, the same blocks are coded in the current occlusion image and the depth occlusion image, only the occlusion data differ.
According to a variant, a second item of filling data is coded in the stream, this item of data being used by a decoding method to fill the non-coded blocks in the depth occlusion image. For example, such a value can be coded in the user data or private data that will be multiplexed with the streams Fc, Fp and Focc. It is possible to code such an item of data at MPEG-2 transport stream level. According to a variant such an MVF data item can be coded in an SEI (Supplemental Enhancement Information) type message. This second item of data can be different from the first item of filling data.

**Figure 7** shows a decoding method of the 3D video signal according to the invention.

The three streams Fc, Fp and Focc and possibly the private data (i.e. the first item of MVF filling data) are demultiplexed, during an optional step 70. According to a variant the three streams and possibly the private data are read on a support such as a DVD or a hard disk.

During a step 72, the current image Ic is decoded. As a simple example, the image Ic is decoded in accordance with the standard H.264. Step 72 is the inverse of step 40.

During a step 74, the depth image Ip is decoded. As a simple example, the image Ip is decoded in accordance with the standard H.264. Step 74 is the inverse of step 42.

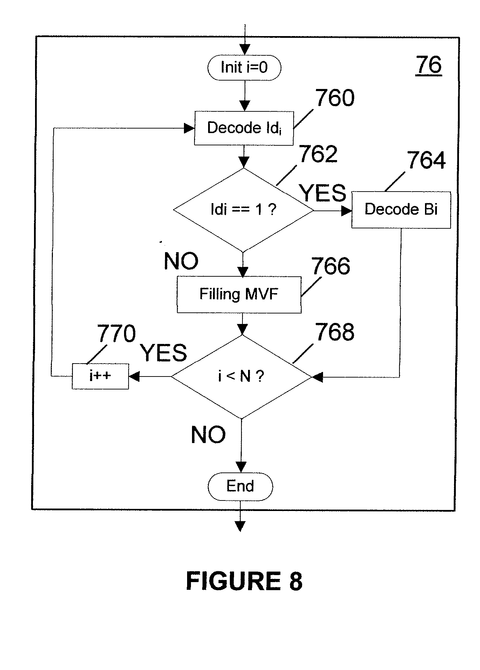

During a step 76, the occlusion image locc is decoded. Step 76 is the inverse step to step 44. Step 76 is described with reference to figure 8. The index I represents the index of the block of the current occlusion image.

During step 760, a binary identifier Idi is decoded for the current block Bi indicating if the current block is coded or not. For example, a value 1 is decoded to indicate that the block Bi is coded and a value 0 indicates that the block Bi is not coded. According to a variant, a value 0 is decoded to indicate that the block Bi is coded and a value 1 is decoded to indicate that the block Bi is non-coded.

During a step 762, it is determined if an item of occlusion information must be decoded for the current block Bi. If the identifier Idi is equal to 1, i.e. indicates that the block Bi is coded, then the method continues to step 764 if not the method continues to step 766.

During a step 764, the block Bi is decoded. More specifically, the occlusion data of the block Bi are decoded for example using the coding principles of the H.264 standard and the block Bi filled with these items of data. This step is the inverse of step 444.

During a step 766, the bloc Bi identified as non-coded is filled by a first MVF predetermined filling data item. Each non-coded pixel of the block Bi is assigned the same MVF value. The block Bi is thus uniform. Such a predetermined filling data is known from the decoding method. It is for example stored in a memory of a decoding device implementing the decoding method according to the invention. It may be an item of constructor data. According to a variant, it is defined by default and takes the value 0 which corresponds to a black non-coded Block Bi.

During a step 768, there is a check to see if the set of N blocks, where N is a whole number, of the current occlusion image are processed. If this is the case then the method ends for the current occlusion image, if not the method processes the next Bi block. For this purpose, the index i is incremented by 1 in step 770.

According to a particular characteristic of the invention, the binary identifiers Idi for the current occlusion image are decoded in the form of a binary image also called a mask in the case where the binary identifiers were coded in the form of such a binary image in a stream Fm. This image is for example decoded without loss with a Huffman decoding. According to a variant, each binary identifier is decoded in a block header. In this case, the stream Fm is possibly demultiplexed in step 70.

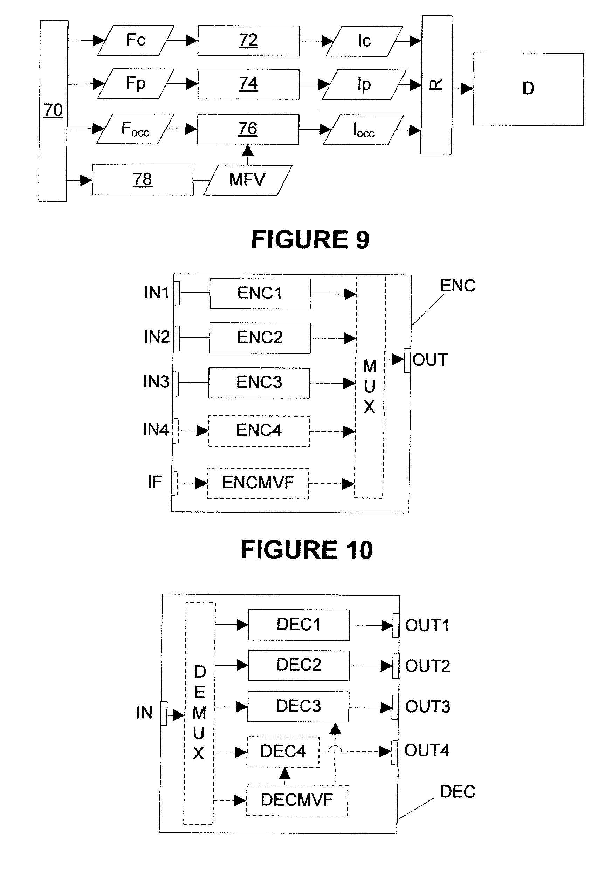

**Figure 9** shows another embodiment. Steps identical to the first embodiment of figure 7 are identified in figure 9 with the same references. According to this embodiment the decoding method comprises steps 72, 74 and 76. It also comprises a step 78 decoding a first item of MVF filling data of blocks Bi of the current occlusion image locc non-coded. Such a value is used by the decoding method to reconstruct the occlusion image. In fact, the non-coded Bi blocks must be filled on the decoder side by a value.

Such an item of filling data is identical for all the decoded occlusion images. For example, such a value is decoded in the user data or private data that are demultiplexed in step 70. It is possible to decode such an item of data at the level of an MPEG-2 transport stream. According to a variant such an item of MVF data can be decoded using an SEI (Supplemental Enhancement Information) type message.

According to a variant, the 3D video signal also comprises a depth occlusion image Ipocc divided into blocks. The decoding method then comprises a step of decoding of depth occlusion data for each block for which the binary identifier indicates that the block is coded. This step is identical to step 764 but is applied on the depth occlusion image blocks. Note that a single binary identifier per block is decoded or a single binary image is decoded that serves both for the current occlusion image and the depth occlusion image. In fact, the same blocks are coded in the current occlusion image and the depth occlusion image, only the occlusion data differ. The block Bi identified as non-coded is filled by a second item of predetermined filling data. Each non-coded pixel of the block Bi is assigned the same value. The block Bi is thus uniform. The second predetermined item of filling data is known from the decoding method. It is for example stored in a memory of a decoding device implementing the decoding method according to the invention. It may be an item of constructor data. According to a variant, it is defined by default and takes the value 255 which corresponds to a white non-coded block Bi. According to another variant, a second item of filling data is decoded, this item of data being used by the decoding method to fill the non-coded blocks in the depth occlusion image. For example, such a value is decoded in the user data or private data that are demultiplexed during step 70. This second item of data may be different from the first item of filling data. It is decoded in the same way as the first item of filling data.

The bandwidth liberated due to the invention can be used to code the other items of data with more precision and thus improved quality. The gain in bitrate obtained can be more or less significant according to the complexity of the content (number of hidden zones or not) but the extra cost due to coding the identifiers is low.

The performances (from a temporal perspective) of the coding method are improved. In fact, contrary to the "skip" mode, the coding method does not need to search for the "optimal" mode. The coded block or non-coded block choice is provided by an exterior item of information. This information is obtained by comparison of the current image Ic and the current occlusion image locc. This information profits the coder as well as the decoder. This advantage can be quite significant when it involves coding/decoding the 4 streams in parallel (current image, depth image, current occlusion image and possibly depth occlusion image).

The coding method according to the invention can be easily adapted to the application. In fact, the user can transmit the filling data item that suits him for the application.

In reference to the figures 7 and 9, the images Ic, Ip, locc and possibly Ipocc are then used (step R) to generate other images or views. The views thus generated are then displayed (step D) on an adapted screen able to display a 3D video signal in the form of a set of views (multi-view auto-stereoscopic screen). Such a screen does not require the wearing of special glasses to see the 3D effect. Note that the steps R and D are not part of the decoding method according to the invention.

In reference to **figure 10****,** the invention also relates to a coding device ENC able to implement the coding method according to the invention. The optional modules are shown in dotted lines in figure 10.

The coding device comprises at least 3 inputs IN1, IN2 and IN3 able to receive the image sequences Ic, Ip and locc. It also comprises coding modules ENC1, ENC2 and ENC3 able to code the images Ic, IP and locc. ENC1 implements step 40 of the coding method, ENC2 implements step 42 of the coding method and ENC3 implements step 44 of the coding method. According to a variant the coding device ENC comprises a fourth input IN4 able to receive the image sequence Ipocc. The input IN4 is connected to a coding module ENC4 able to implement the coding of depth occlusion images. The coding device comprises a multiplexing module MUX able to multiplex the streams from coding modules into a transport stream. The output of the multiplexing module is connected to an output OUT of the coding device ENC. According to a variant the multiplexing module is external to the coding device in which case each coding module is connected to a specific output of the coding device. According to another embodiment the coding device comprises an ENCMVF module to code filling data or one item of filling data. These filling data are for example specified by the user via an interface IF.

In reference to **figure 11,** the invention also relates to a decoding device DEC able to implement the decoding method according to the invention. The optional modules are shown in dotted lines in figure 11.

The decoding device DEC comprises an input IN able to receive a stream representative of a 3D video signal coming for example from the coding device ENC. This input is connected to a demultiplexing module DEMUX able to demultiplex the stream received at the input IN into at least three streams. According to a variant the demultiplexing module is external to the decoding device in which case the decoding device DEC comprises at least 3 inputs, each input is adapted to receive one of the streams Fc, Fp and Focc. The device can comprise another input to receive the stream representative of depth occlusion images.

The decoding device DEC also comprises coding modules DEC1, DEC2 and DEC3 connected at the output of the demultiplexing module DEMUX able to decode the images Ic, Ip and locc. DEC1 implements step 72 of the decoding method, DEC2 implements step 74 of the decoding method and DEC3 implements step 76 of the decoding method. According to a variant the decoding device DEC comprises a fourth decoding module DEC4 able to implement decoding of depth occlusion images. Each output of coding modules is connected to a specific output (OUT1, OUT2, OUT3 and OUT4) of the decoding device DEC.

According to another embodiment the decoding device comprises a DECMVF module to decode filling data or one item of filling data. These filling data are provided to the occlusion images decoding modules, DEC3 and possibly DEC4, for filling non-coded blocks. According to a variant the filling data are stored in a memory of the decoding device in which case it does not comprise a decoding module DECMVF.

Naturally, the invention is not limited to the embodiment examples mentioned above.

In particular, those skilled in the art may apply any variant to the stated embodiments and combine them to benefit from their various advantages. The invention described for a current image with which are associated a depth image, a current occlusion image and possible a depth occlusion image can apply to a sequence of such images.

## Claims

1. Method for coding, in a video coder, a 3D video signal in a video encoder comprising a current image, a depth image and a current occlusion image, said images being divided into blocks, comprising a step of coding (40, 42, 44) said current, depth and occlusion images,
said method being **characterized in that** said current occlusion image is coded (44) according to the following steps:
- coding (440, 446) for each block of said current occlusion image a binary identifier indicating if said block is coded or not and, if said block is not coded, indicating that said block is filled when decoded with a first item of filling data, and
- coding (44) occlusion data for each block for which said binary identifier indicates that said block is coded.

2. Method for coding according to claim 1, wherein the step of coding (440, 446) for each block of said current occlusion image of a binary identifier comprises the coding without loss of a binary image.

3. Method for coding according to claim 2, further comprising a step of coding (46) of said first item of filling data.

4. Method for coding according to one of claims 1 to 3, wherein, said 3D video signal further comprising a depth occlusion image divided into blocks, said method comprises a step of coding of depth occlusion data for each block of said depth occlusion image for which said binary identifier indicates that said block is coded.

5. Method for coding according to claim 4, further comprising a step of coding of a second item of image data for filling said blocks of said depth occlusion image indicated as non-coded by said binary identifier.

6. Method for coding according to one of claims 1 to 5, wherein said binary identifier indicates that a block is non-coded when all the pixels of said block of said current occlusion image are identical to the pixels of the corresponding block in said current image.

7. Method for decoding, in a video decoder, a 3D video signal in a video decoder comprising a current image, a depth image and a current occlusion image, said images being divided into blocks, comprising a step of decoding (72, 74, 76) said current, depth and occlusion images,
said method being **characterized in that** said current occlusion image is decoded (76) according to the following steps for:
- decoding (760) for each block of said current occlusion image a binary identifier indicating if said block is coded or not and, if said block is not coded, indicating that said block is filled when decoded with a first item of filling data,
- decoding (764) each block of said current occlusion image for which said binary identifier indicates that said block is coded, and
- filling (766) the blocks indicated as non-coded by said binary identifier with said first item of filling data.

8. Method for decoding according to claim 7, wherein the step of decoding (78) for each block of said current occlusion image of a binary identifier comprises the decoding without loss of a binary image.

9. Method for decoding according to claim 7 or 8, further comprising a step of decoding of said first item of filling data.

10. Method for decoding according to one of claims 7 to 9, wherein said 3D video signal comprising in addition a depth occlusion image divided into blocks, said method also comprises the following steps for:
- decoding each block of said depth occlusion image for which said binary identifier indicates that said block is coded, and
- filling said blocks indicated as non-coded by said binary identifier with a second item of filling data.

11. Method for decoding according to claim 10, wherein it comprises in addition a step of decoding of said second item of filling data.

12. Device for coding a 3D video signal comprising a current image, a depth image and a current occlusion image, said images being divided into blocks, comprising means for coding said current, depth and occlusion images, **characterized in that** said coding device comprises:
- means for coding for each block of said current occlusion image a binary identifier indicating if said block is coded or not and, if said block is not coded, indicating that said block is filled when decoded with a first item of filling data, and
- means for coding occlusion data for each block for which said binary identifier indicates that said block is coded.

13. A coding device according to claim 12, wherein the device is adapted to execute the steps of the coding method according to any of claims 1 to 6.

14. Device for decoding a 3D video signal comprising a current image, a depth image and a current occlusion image, said images being divided into blocks, comprising means for decoding said current, depth and occlusion images,
**characterized in that** said decoding device comprises:
- means for decoding for each block of said current occlusion image a binary identifier indicating if said block is coded or not and, if said block is not coded, indicating that said block is filled when decoded with a first item of filling data,
- means for decoding each block of said current occlusion image for which said binary identifier indicates that said block is coded, and
- means for filling the blocks indicated as non-coded by said binary identifier with said first item of filling data.

15. A decoding device according to claim 14, wherein the device is adapted to execute the steps of the decoding method according to any of claims 7 to 11.
